(19) Europäisches Patentamt
European Patent Office
Office européen des brevets

(11) EP 0 669 946 B2

(12) NEW EUROPEAN PATENT SPECIFICATION

(45) Date of publication and mention of the opposition decision:
**19.12.2001 Bulletin 2001/51**

(45) Mention of the grant of the patent:
**01.07.1998 Bulletin 1998/27**

(21) Application number: **94929804.6**

(22) Date of filing: **15.09.1994**

(51) Int Cl.[7]: **C08F 210/06**, C08F 2/38

(86) International application number:
**PCT/US94/10400**

(87) International publication number:
**WO 95/07943 (23.03.1995 Gazette 1995/13)**

(54) **POLYMER PRODUCTION**
HERSTELLUNG VON POLYMEREN
PRODUCTION DE POLYMERES

(84) Designated Contracting States:
**AT BE DE ES FR GB GR IT NL PT SE**

(30) Priority: **16.09.1993 US 122115**

(43) Date of publication of application:
**06.09.1995 Bulletin 1995/36**

(73) Proprietor: **UNION CARBIDE CHEMICALS & PLASTICS TECHNOLOGY CORPORATION**
**Danbury, Connecticut 06817-0001 (US)**

(72) Inventors:
- **McCULLOUGH, James, Douglas, Jr.**
  **Houston, TX 77079 (US)**
- **GOODE, Mark, Gregory**
  **Hurricane, WV 25526 (US)**

(74) Representative: **Allard, Susan Joyce et al**
**BOULT WADE TENNANT, Verulam Gardens 70 Gray's Inn Road**
**London WC1X 8BT (GB)**

(56) References cited:

| | |
|---|---|
| EP-A- 0 116 248 | EP-A- 0 116 797 |
| EP-A- 0 225 099 | EP-A- 0 376 559 |
| EP-A- 0 449 519 | EP-A- 0 517 183 |
| EP-A- 0 560 035 | WO-A-93/09150 |

- **PATENT ABSTRACTS OF JAPAN vol. 4, no. 174 (C-33) (656) 2 December 1980 & JP,A,55 115 417 (SHOWA DENKO K.K.) 5 September 1980**

EP 0 669 946 B2

## Description

### Technical Field

This invention relates to the production of certain polyolefin compositions of good impact strength and low gel content. More particularly, the invention relates to an improved process for the gas phase production of propylene/a-olefin of $C_2$-$C_8$ copolymers in which the degree of fouling, gel production, and polymer cohesiveness is substantially reduced.

### Background Art

Polymeric polypropylene compositions have gained wide commercial acceptance and usage in numerous applications because of the relatively low cost of the polymers and the desirable properties they exhibit. Polypropylene homopolymers, however, have the disadvantage of being brittle with low impact resistance, particularly at low temperatures. Most procedures proposed for modifying the properties of polypropylene homopolymer to improve the impact strength have included the provision of a polypropylene/other $\alpha$-olefin copolymer phase in an otherwise homopolymeric polypropylene. A propylene/ethylene copolymer phase is particularly useful for this purpose. The structure of such products is not entirely certain with some sources referring to a block copolymer and other sources referring to other structures. However, such materials are well known and of substantial commercial importance. They are referred to as polypropylene impact copolymers, regardless of the precise nature of their structure, and are said to contain a homopolymer phase (often polypropylene homopolymer) and a rubber phase (the copolymer phase). In the formation of impact copolymer products, it is desirable to operate polymerizations at an intrinsic viscosity ratio of rubber phase to homopolymer phase (termed $\beta/\alpha$) values near or greater than 2 for enhanced notched toughness and retention of good stiffness.

A typical process for the production of a polypropylene impact copolymer is conducted in at least two stages. The homopolymer phase is conventionally produced first in one or more reactors and the product of this first stage together with any unreacted monomer is then passed to a second stage where the copolymer phase is produced. It is in the second stage that a large proportion of the processing difficulties for the overall process are encountered. In slurry, bulk or other solvent/diluent based processes, swelling and partial dissolution of the rubbery second stage product can take place. As a result, the polymer product of the second stage may be "tacky" or "sticky" and adheres to the walls of the reactor and other internal surfaces, e.g., stirring blades.

It is the inclusion of particles comprised largely of ethylene-propylene rubber of high viscosity (intrinsic viscosity ratio of ethylene-propylene rubber viscosity to homopolymer viscosity greater than two) that leads to gels in extruded films made from the copolymeric products of this process. As the rubber content ($F_c$) increases and more particularly, the $\beta/\alpha$ of the copolymer increases above a critical region, the gel content of the copolymer increases. Gels are polymeric heterogeneities that can affect critical properties when they are of the order of 30 microns (µm) or greater in size. Numerous gels in an extruded film are an indicator of poor mechanical properties, and particularly impact strength deficiencies. Further, in consumer applications directly involving use of extruded film, gels are cosmetically undesirable.

In fluidized bed gas phase processes, reaction system fouling can be a problem, especially in the second stage reactor, and heat exchange unit of the second stage reactor. It is known that control of the relative proportions of homopolymer portion and copolymer portion, as well as to some extent the degree of fouling in the second stage reactor, can be effected by the addition of various materials to the second reactor. In general, such materials include catalyst deactivators which "kill" or reduce catalyst activity.

Takayuki et al, U.S. 4,551,509 disclose the addition of a polyalkylene glycol to the reaction mixture of a reactor system for producing ethylene homopolymers or copolymers in order to deactivate the catalyst. Levresse et al, U.S. 4,650,841, disclose the use of certain amides, polyalkylene polyols or epoxides for a similar purpose but the additive is introduced into a monomer recycle stream after removal from the stream of a polymer product. Weimer et al, U.S. 3,962,196, employ heterocyclic additives such as N-vinylpyrrolidone to reduce polymer deposits on the interior walls of a polymerization reactor.

In published European Patent Application 225,099 the properties of a polypropylene impact copolymer are said to be improved by catalyst deactivation with a polyalkylene glycol ether in specified quantity relative to the quantity of the titanium component of the polymerization catalyst. The process was a batch, liquid phase process and the glycol ether was introduced in between the first and second stages or added directly to the second stage reactor. As a part of the overall effect of this addition of glycol ether, the activity of the second stage polymerization catalyst is reduced to 30% to 80% of the catalyst activity before addition.

A related process is disclosed by Chiba et al, published Japanese Patent Application 8846211, disclosure date February 27, 1988. In this process, which may be gas phase, a polyalkylene glycol ether is added continuously

in specified ratio to the titanium to the second stage reactor. In the gas phase modification of the process, preference is stated for adding the glycol ether to the second stage recycle loop downstream from the heat exchanger. In this process as well, the catalytic activity of the second stage polymerization catalyst is reduced to 30% to 80% of the activity before glycol ether addition.

It is well known by those familiar with gas phase processes involving recycle systems for heat removal that the largely gaseous material within the loop has within it entrained fines derived largely from catalyst particulates and partially reacted particles. The degree of entrainment of said particles depends on various factors, including the gas phase velocity, the catalyst type and geometry, other reactor conditions, and so on. In the usual case where one makes homopolymer in the first reactor, the partially reacted particles may be termed homopolymeric.

Catalyst particles and/or partially polymerized particles which bypass to the second stage reactor may result in unwanted gels in the product. It is desirable to provide an improved polymerization process which reduces significantly the amount of active catalyst particles and/or partially polymerized particles that transfer from the first stage reactor to the second stage reactor. It is further desirable that such a polymerization process would provide for the operation of polymerizations at $\beta/\alpha$ values of about 1.8 or greater and at higher rubber content ($F_c$) by reducing the production of gels in the second reactor, reducing fouling in the second reactor and reducing stickiness (cohesiveness) of the polymer in the second reactor.

## Disclosure of the Invention

The present invention provides an improved method for the production of polypropylene impact copolymers. More parti-cularly, the present invention provides an improved two-stage, gas phase process for the production of polypropylene impact copolymers wherein as claim 1.

The amount of polymerization catalyst present which is entrained in the primarily gaseous material circulating above the particle bed of the first stage reactor is necessarily small and consists mainly of catalyst fines and partially polymerized particles (i.e., particles containing only a partial coating or inclusion of polymer). As a result, the amount of reduction component needed to reduce the activity of the catalyst fines and partially polymerized particles present in the first stage recycle loop and therefore reduce the amount of active catalyst fines entering the second reactor and substantially reduce the production of gels (or gel precursors) in the second reactor, is also small. Particularly when the reduction component is efficient, the activity of the first or second stage reactor is not substantially adversely influenced by any proportion of the reduction component which may come in contact with the particle bed.

## Best Mode for Carrying Out the Invention

Olefin polymerization processes broadly may employ a liquid, non-polymerizable diluent or alternatively may employ as liquid diluent a monomer of the polymerization, especially propylene. To produce the present polypropylene impact polymers having a particularly desirable combination of properties, it is necessary to employ a gas phase process.

The polymerization process is conducted in the presence of a stereoregular olefin polymerization catalyst. Such catalysts are broadly well known and conventional and are employed in the polymerization of $\alpha$-olefins of three or more carbon atoms to produce stereoregular products. In terms conventionally employed to describe such catalysts, the stereoregular catalysts of high activity contain as a first constituent a procatalyst which is a titanium-containing solid, usually a titanium halide-containing solid, and which often contains an electron donor. Suitable electron donors include ethers, esters, ketones, phenols, amines, amides, imides, nitriles, phosphines, phosphites, arsines, phosphoramides and alcoholates, and combinations thereof. Preferred electron donors are aromatic esters and particularly preferred are ethyl benzoate and isobutyl phthalate.

The second catalyst constituent, termed a cocatalyst, is an organoaluminum compound which may be partly or totally complexed with the third catalyst constituent, conventionally termed a selectivity control agent. Illustrative selectivity control agents include aromatic esters, amines and particularly hindered amines, aliphatic esters, phosphites, phosphates, silanes, particularly alkoxysilanes and aryloxysilanes, hindered phenols and mixtures thereof.

Such stereoregular olefin polymerization catalysts are described in numerous patents and other references including Nestlerode et al, U.S. 4,728,705, Goodall et al, 4,414,132, and Wilson et al, U.S. 4,971,936. Although a variety of chemical compounds are useful as the constituents of the polymerization catalyst, a typical stereoregular olefin polymerization catalyst contains as a procatalyst a solid comprising magnesium halide, a titanium halide and an electron donor such as ethyl or diisobutyl phthalate. The halide moieties of such procatalysts are customarily chloride moieties. The cocatalyst is typically triethylaluminum or triisobutylaluminum which is often at least partially complexed with an aromatic ester such as ethyl p-ethoxybenzoate or methyl p-methylbenzoate or with a silane such as diisobutyldimeth-oxysilane, octadecyltriethoxysilane or n-propyltrimethoxysilane as the selectivity control agent. Use of the catalysts of this type results in a stereoregular polymeric product when $\alpha$-olefins of three or more carbon atoms are

polymerized. Many of the stereoregular olefin polymerization catalysts are also recognized as high activity catalysts which are able to catalyze the formation of polymers of desirable properties without the necessity of removing catalyst residues in a de-ashing step.

The polymerization process to which the present invention is applied is a gas phase process employing a fluidized bed of polymer particles or a gas-phase process utilizing partially condensed monomer. A number of suitable gas phase processes are available but one such process which is illustrative of the invention is described by Goeke et al, U.S. 4,379,759, which involves a fluidized bed, continuous gas phase process and is incorporated herein by reference.

A gas phase process is typically operated by charging to a suitable reactor an amount of preformed polymer particles and a lesser amount of catalyst components. The olefin or olefins to be polymerized are provided as a gas passed through the bed of particles at a high rate and under polymerization conditions of temperature and pressure sufficient to initiate polymerization. Upon passing through the particle bed the unreacted gas is withdrawn from the reactor and recycled together with make-up feed gas. As the catalyst is lost through incorporation of a minute amount of catalyst in the polymer product, additional catalyst is provided to the reactor, often through the use of an inert transport gas such as nitrogen or argon. The reaction temperature is suitably within the range of from about 30°C to about 120°C, preferably from about 500c to about 90°C, with a reaction temperature in the range of 60°C to 80°C being most preferred.

A variety of methods are useful in maintaining the reaction temperature within this range. According to the present invention, this objective is obtained at least in part through the use of one or more recycle loop systems. A portion of the unreacted gas stream which is primarily a gaseous material is removed from the reactor, and after passage through the particle bed, together with small amounts of entrained catalyst which primarily comprises catalyst fines and partially polymerized particles, it passes through a conduit i.e. recycle loop system, which includes a compressor and a heat exchange unit. The cooled, primarily gaseous material is returned to the reactor for additional passage through the polymer particle bed. The function of the recycle loop is to maintain a desired reaction temperature by removal of heat by the heat exchange unit, and to provide gas flow for bed fluidization for that class of gas phase polymerizations. The compressor provides pressure and agitation of the gaseous material to move the gaseous material through the recycle loop. An additional means of process and product control is achieved by the provision for addition of molecular hydrogen to the reactor and thus the polymerization system. The addition of molecular hydrogen serves to control the molecular weight of the polymeric product and, with the second stage reactor the relative molecular weights of the homopolymer and copolymer portions. Although it is not desired to be limited by any particular theory it is likely that the molecular hydrogen serves as a chain transfer agent. The precise control of reaction conditions, the rate of addition of catalyst, feed gas and molecular hydrogen as well as the rate of recycle of unreacted monomer is broadly within the skill of the art.

According to the present invention, the gas phase process of the invention is operated as a two stage process wherein each stage operates in the gas phase in one or more reactors. In the first stage, a homopolymer phase (i.e. first phase) is produced which is predominantly but not necessarily propylene homopolymer. To obtain products of particular properties it may be useful to incorporate in the otherwise homopolymer portion a small amount, i.e., up to about 6% by weight, with up to 4% being preferred, of a second α-olefin such as ethylene, 1-butene or an even higher molecular weight α-olefin. The optional incorporation of other α-olefin is by conventional methods and serves to modify but not substantially change the properties of the first stage homopolymer portion.

Where small amounts of other olefin are present, the polymer product is still referred to as the first stage homopolymer phase or first phase product although technically it is copolymeric. Homopolymeric phases produced from substantially entirely polypropylene, i.e., phases produced in the substantial absence of other α-olefins, are preferred.

The olefin feed and circulating gas in the first stage reactor is passed through the particle bed and the desired polymer product is formed by growth of polymer product on the polymer particles coating either partially or completely the catalyst particles provided to the reactor. The olefin and circulating gaseous material is routed from the reactor together with small amounts of entrained catalyst which primarily comprises catalyst fines and partially polymerized particles through a first recycle loop which includes a heat exchanger and a compressor. The polymer product is removed from the first stage reactor and transferred to a second stage reactor by conventional means at a rate substantially equivalent to the rate of polymer production.

The product of the second stage reactor, which also may be conducted in one or more reactors, is predominantly a copolymer of ethylene and propylene although small amounts of other α-olefin moieties could optionally be present. Through control of the proportion of unreacted propylene from the first stage reactor and the proportion of ethylene provided to the copolymerization reactor it is possible, and conventional, to vary the proportion of ethylene in the ethylene/propylene copolymer phase. Within the impact copolymers produced according to the invention the proportion of ethylene in the copolymer phase is suitably from about 35% by weight to about 95% by weight based on the total copolymer phase or second phase. Proportions of ethylene in the copolymer phase from about 35% by weight

to about 65% by weight on the same basis are preferred, with 38% to 60% being more preferred. It is also conventional to control the molecular weight of the copolymer portion as by introduction of molecular hydrogen and to control the relative amounts of the homopolymer and the copolymer phases. The copolymer phase of the total polypropylene impact copolymer is suitably from about 5% by weight to about 60% by weight of the total impact copolymer composition. Proportions of the copolymer phase from about 10% by weight to about 40% by weight on the same basis are preferred, with 12% by weight to about 35% by weight being more preferred.

The circulating primarily gaseous material comprises, as the major component, the unreacted monomer gases that have passed through the polymer particle bed. However, this material will also contain entrained particles of active catalyst, particularly those small irregular catalyst particles often referred to as "fines" as well as catalyst particles which are partially although not completely covered or imbibed with polymer product, i.e., partially polymerized particles. It is this mixture of monomer and active catalyst that leads to fouling of the reactor recycle loop, particularly the relatively small diameter passages of the heat exchange unit Although this potential for fouling exists in both the first and the second stage reactor recycle loops, the nature of the copolymer product of the second stage reactor is such that fouling is a more acute problem.

The product of the second stage reactor is rather rubbery in character and, being somewhat "sticky" and "tacky" it can and will adhere to the walls of the conduit which comprises the second stage reactor recycle loop. Over time the buildup of such undesirable polymer will foul and eventually clog the heat exchanger tubes. As heat exchanger tubes accumulate fouling deposits, the pressure drop across the heat exchanger increases, and the deposits reduce the cooling efficiency of the heat exchanger, since they form an insulating boundary. With continued operation, a point would be reached where either the pressure drop across the heat exchanger exceeds the compressor operational limit or the heat exchanger efficiency falls below the acceptable limit. In either event, the polymerization unit must be shut down.

The present invention provides for the introduction of at least one low volatility, i.e. liquid, reduction component into the first stage reactor. The reduction component (i.e., catalyst deactivator) is introduced within the first stage recycle loop ahead of the heat exchanger. The reduction component is introduced into the first stage reactor system for the purpose of "killing" catalyst fines and slightly reacted particles, i.e. catalyst entrained in the primarily gaseous material, circulating in the first stage reactor including the first stage recycle loop. As a result the amount of highly active catalyst fines that transfer from the first reactor to the second reactor is substantially reduced. Hence, the production of gel precursors during the formation of the rubbery copolymer in the second reactor and fouling in the second reactor recycle system is substantially reduced.

According to the invention, the reduction component is introduced into the first stage recycle loop at a point between the entrance to the loop from the first stage reactor and the heat exchanger. The precise point of introduction is not critical, but best results are obtained when the point of introduction is near the compressor inlet, wherein the compressor is situated ahead of the heat exchanger in the recycle loop. Because the amount of active polymerization catalyst in the recycle loop is rather small the amount of reduction component is also small so as not to unduly reduce the catalytic activity within the first or second stage reactor.

The improved process of the invention therefore comprises the provision of certain electron donor materials as reduction components which are introduced to the first stage reactor. It is preferred that the reduction components are introduced within the first stage recycle loop or near the entrance thereof. It is more preferred that the reduction components are introduced ahead of the compressor and heat exchanger, in quantities sufficient to substantially reduce or eliminate the catalytic activity of polymerization catalyst entering and passing through the recycle loop. Amounts of the reduction component continuously added should generally be no more than about equimolar with aluminum alkyl carry-over to the recycle loop with fines (0.001 to 12.0 on a molar ratio basis of deactivator to aluminum alkyl added to the reactor is preferred, a ratio within 0.005 to 8.0 is more preferred, with a molar ratio of 0.01 to 2.0 being most preferred).

The catalyst deactivator component or reduction component is suitably applied by introducing it simultaneously with the passage of unreacted monomer through the first stage recycle loop and the addition is preferably continuous for so long as material passes through the first stage recycle loop, although addition of reduction component in increments at short intervals is also satisfactory. The catalyst deactivator is provided by continuous or intermittent injection of substantially liquid reduction component into the substantially gaseous material entering the recycle loop. Contact of this reduction component and entrained catalyst particles serves to substantially reduce or eliminate the catalyst activity of such particles, with a consequent reduction in the production of gel precursors in the second stage reactor, and fouling that results from the production of sticky polymer in the second stage reactor.

The reduction components to be provided to the first stage recycle loop are electron donating compounds such as alkylene compounds, ketone compounds, tertiary amines of up to 12 carbon atoms, ester compounds, acid amide compounds including phosphoric acid amide compounds, alcohols and combinations thereof. Suitable alkylene compounds include alkylene glycol compounds or alkylene glycol derivatives of alkylenediamine, or ether or ester derivatives thereof. The typical tertiary amine compounds that can be used as the organic electron donor are tertiary

amines of hydrocarbon groups with 12 carbon atoms at the most. Examples of such tertiary amines may be triethylamine, tributylamine and trihexylamine.

The alcohols for the present invention have up to a total of 15 carbon atoms. Suitable alcohols include ethanol, methanol and combinations thereof.

The ketone compounds desirable for the present invention should be those in which the total number of carbon atoms does not exceed 20. Typical examples of those ketone compounds desirable for the present invention may be methyl ethyl ketone, cyclohexanone, acetophenone, and dibutyl ketone.

The ester compounds desirable for the present invention should be those in which the total number of carbon atoms does not exceed 30. The examples of the desirable ester compounds are ethyl acetate, butyl butyrate, ethyl benzoate, diethyl phthalate, and γ-butyrolactone.

Among the ether compounds that can be used as electron donors, those desirable for the present invention are ethers in which the total number of carbon atoms does not exceed 20. Typical examples of the desirable ethers are diethyl ether, dibutyl ether, diisoamyl ether, anisole, and diphenyl ether.

Furthermore, those acid amide compounds that are suitable for the present invention are N,N-dialkylamide compounds in which the total number of the carbon atoms does not exceed 20. Typical examples of the suitable acid amide compounds may be N,N-dimethylacetamide, N,N-diethylacetamide, N,N-dimethylbenzamide, and N,N-dimethylacrylamide.

In addition, phosphoric acid amide compounds desirable for the present invention are N,N-dialkylphosphoric amide compounds such as hexamethylphosphoric triamide, and hexaethylphosphoric triamide.

The alkylene glycol compounds or derivatives are represented by the formula

$$R\text{-}O\text{-}(\text{-}C_nH_{2n})\text{-}O\text{-})\text{-}_x\text{-}R \qquad (I)$$

wherein n is 2 or 3, R independently is hydrogen, alkyl of up to 20 carbon atoms or acyl of up to 20 carbon atoms, or any combination thereof, and x independently is a number from 1 to about 10 including any combination thereof. Further, the invention includes compounds wherein random incorporation (in a statistical sense) or blocked sequences of different alkylene oxide species, e.g., propylene oxide and ethylene oxide, are copolymerized as part of the structure. At least one R is preferably alkyl or acyl. The alkylene glycol derivatives of alkylenediamine or derivatives thereof are represented by the formula

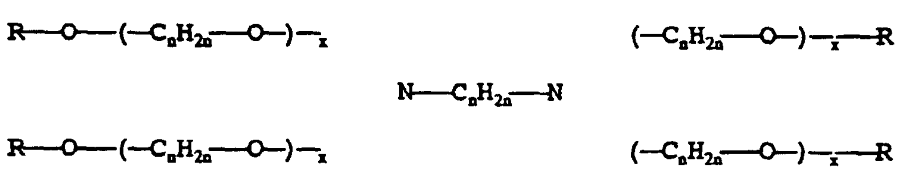

(II)

wherein R, n and x have the previously stated meanings, including the afore stated compounds having a random or blocked alkylene oxide incorporation. It is noted that x may differ for each branch on nitrogen, and may equal 0 for up to 3 branches, in which case it is understood that the attached radical or group is replaced by hydrogen.

Illustrative R groups in addition to hydrogen include alkyl groups such as methyl, ethyl, hexyl, octyl and tetradecyl as well as acyl groups such as acetyl, butyryl and dodecanoyl. The term n is independently 2 or 3. The term x represents the total number of alkylene oxide moieties present and may be an integer but may also be an average of alkylene oxide moieties in a mixture of compounds so that x is not necessarily a whole number.

Suitable alkylene glycol compounds and ether and ester derivatives thereof are illustrated by ethylene glycol, propylene glycol, diethylene glycol, tetrapropylene glycol, hexaethylene glycol, decapropylene glycol, ethylene glycol monomethyl ether, diethylene glycol dihexyl ether, tripropylene glycol monooctyl ether, tetradecaethylene glycol dipropyl ether, ethylene glycol mono-acetate, dipropylene glycol dibutyrate, tetraethylene glycol monohexanoate and hexapropylene glycol didecanoate. Mixtures of any of the above, and particularly of mono and di-esters and ethers, are contemplated in this invention. In general, the alkylene glycol ethers and esters are preferred over the corresponding alkylene glycols. Also preferred are those alkylene glycol compounds or ether and ester derivatives thereof wherein the term x is a whole number from 1 to 4 and each n is 2 or 3. Especially preferred are dipropylene glycol mono and diethers, and diethylene glycol mono and diesters.

The alkylene glycol derivatives of alkylene diamine are illustrated by compounds such as N,N,N',N'-tetra(2-hydroxyethyl)ethylene diamine and N,N,N',N'-tetra(3-hydroxypropyl)-1,3-propylenediamine, N,N'-di(2-methoxyethyl)-ethylenediamine, N,N,N'-tri(3-propanoylpropyl)propylenediamine, N-(2-hydroxyethyl)-N,N'-di(2-propyloxyethyl)-ethylenediamine and N,N,N',N'-tetra(2-acetyloxyethyl)-propylenediamine. In the case of these alkylene glycol derivatives of alkylene diamine, those compounds of formula II wherein each R is hydrogen are preferred as are derivatives of ethylenediamine. A particularly preferred class of such compounds is produced by sequential reaction of propylene oxide and ethylene oxide with ethylenediamine. Certain of these compounds are commercial and are marketed by BASF/ Wyandotte under the trademark TETRONIC® Polyols.

Wherein the reduction component is introduced directly to the first stage recycle loop, it appears likely that the reduction component serves to coat the walls of the first stage recycle loop and the catalyst particles entrained in the gaseous material passing through the recycle loop and thereby substantially reduces or kills the actiyity of the catalyst fines and partially polymerized polymer particles in the recycle loop. Deadened homopolymeric fines entering the second stage reactor coat the high rubber content ($F_c$) particles, which reduces the cohesiveness of the polymer particles and allows higher $F_c$ operation. In any event, however, fouling of the second stage reactor, (including second reactor recycle loop) and polymer cohesiveness are substantially reduced. This enables extended operation of the process without the need for shut-down to remove fouling deposits. Further, the production of gels in the copolymer phase is substantially reduced. Moreover, any small amount of the reduction component which does pass through the recycle loop of the first stage reactor and on to the second stage reactor is sufficiently small so as not to substantially reduce the activity of the catalyst in the second stage reactor. These improvements are most easily recognized in the improved economics of the overall polymerization process.

The invention is further illustrated by the following Illustrative Embodiment including Comparative Runs, which should not be regarded as limiting.

<u>Illustrative Embodiment I</u>

In order to demonstrate the effect of employing a small amount of a component of the invention in the first stage reactor, a production run was made wherein polypropylene impact copolymer was produced utilizing a commercial-type, high activity, stereoregular olefin polymerization catalyst in a two-stage continuous gas phase process as described and illustrated in U.S. Patent 4,983,562.

In each polymerization, the procatalyst component was fed into a gas-phase reactor as a 5 percent by weight dispersion in mineral oil. Simultaneously and continuously, triethylaluminum cocatalyst, as a 25 percent by weight solution in isopentane and n-propyltrimethoxysilane as the selectivity control agent, as a 4 percent by weight solution in isopentane, were introduced into the first stage reactor. Sufficient hydrogen was introduced to regulate the molecular weight of the polymer produced (maintain melt flow of about 4.5 dg/min). A small amount of nitrogen was also present. The partial pressure of propylene in the first stage reactor was about 2344 kPa (340 psi). The polymerization temperature was 65°C with a residence time of 1.5 to 2 hours. Approximately 0.90 to 1.36 kg (2 to 3 pounds) of homopolymer produced was intermittenly transferred from the first stage reactor to the second stage reactor. The propylene partial pressure in the second reactor ranged from about 207 kPa (30 psi) to about 552 kPa (80 psi). Sufficient ethylene was introduced to the second reactor to produce a rubber fraction containing 55 to 60% wt of ethylene. The total pressure in the second stage reactor was maintained from about 1379 kPa (200 psi) to about 2068 kPa (300 psi).

The components were introduced into the first or second reactor loop upstream from the heat exchanger in various quantities to obtain the desired molar ratio of the component to the aluminum content of the catalyst particles entrained in the vapors passing through the recycle loop. The components were dispersed in isopentane as a carrier.

The following components were used as dilute solutions in isopentane:

Pegosperse® 100L diethylene glycol laurate (available from Lonza, Inc. of Fairlawn, New Jersey)
Methyl Dipropasol
1-Hexyne
Triethylaluminum ("TEAL")
1-Decyne

"Melt flow" of the polymer product is determined according to ASTM D-1238 (Cond. 230/2.16). The beta/alpha ("β/α") ratio as a function of melt flow is calculated according to the following relationship:

$$\beta/\alpha = 1 + [\frac{1}{F_c}[[\frac{MFhomo}{MFwhole}]^{0.213} -1]]$$

where $F_c$ is the weight fraction ethylene/propylene copolymer rubber phase, $MF_{homo}$ is the melt flow of the homopolymer phase of the first reactor and $MF_{whole}$ is the melt flow of impact copolymer. β/α as a function of intrinsic viscosity is

calculated according to the following relationship:

$$\beta/\alpha=1+[\frac{1}{F_c}[\frac{IV1}{IV2}-1]]$$

where $F_c$ is the weight fraction of ethylene/propylene copolymer rubber phase, IV1 is the intrinsic viscosity of the impact copolymer, and IV2 is the intrinsic viscosity of the homopolymer. The intrinsic viscosity is determined with a Vscotek Relative Viscometer, Model No. Y501 (decalin at 130°C, using a Huggins constant of 0.30). The results are shown in TABLE 1.

TABLE 1

| PART | PRODUCT MELT FLOW | $F_c$ [a] %w | β/α [b] IV | β/α [b] MF | COMPONENT | CYCLE [c] GAS LOOP | MOLE RATIO (D/A) [d] |
|---|---|---|---|---|---|---|---|
| 2-25 | 4.2 | 20.7 | 2.28 | 1.97 | None | -- | -- |
| 3 [e] | -- | -- | -- | -- | Pegosperse® 100L | R2 | 0.39 |
| 4A-75 | 4.0 | 17.5 | 2.57 | 1.93 | None (TEAL) [f] | R2 | -- |
| 4A-81 | 6.8 | 14.1 | 2.50 | 1.94 | None | -- | -- |
| 4B-93 | 3.6 | 23.2 | 2.30 | 2.09 | 1-Hexyne | R2 | 2.43 |
| 4B-96 | 3.7 | 21.6 | 2.62 | 2.29 | 1-Hexyne | R2 | 1.67 |
| 5-40 | 4.2 | 20.8 | 2.03 | 2.01 | Pegosperse® 100L | R1 | 0.059 |
| 5-50 | 4.9 | 17.3 | 2.04 | 1.87 | Pegosperse® 100L | R1 | 0.017 |
| 6 [e] | -- | -- | -- | -- | Pegosperse® 100L | R2 | 0.38 |
| 8-110 | 4.6 | 21.3 | 2.30 | 2.11 | Methyl Dipropasol | R1 | 0.13 |
| 8-112 | 3.9 | 17.5 | 2.51 | 1.82 | Methyl Dipropasol | R1 | 0.15 |
| 10-119 [g] | 3.9 | 22.2 | 2.63 | 2.07 | Methyl Dipropasol<br>1-Hexyne | R1<br>R2 | 0.14<br>0.94 |
| 10-120 [g] | 4.6 | 26.6 | 2.41 | 2.12 | Methyl Dipropasol<br>1-Hexyne | R1<br>R2 | 0.12<br>0.72 |

TABLE 1 (Cont.)

| PART | PRODUCT MELT FLOW | $F_c$[a] %w | $\beta/\alpha$[b] IV | $\beta/\alpha$[b] MF | COMPONENT | CYCLE[c] GAS LOOP | MOLE RATIO (D/A)[d] |
|---|---|---|---|---|---|---|---|
| 10-122[g] | 3.3 | 22.3 | 2.54 | 2.08 | Methyl Dipropasol | R1 | 0.13 |
| | | | | | 1-Decyne | R2 | 0.70 |

[a] Fc is rubber content of copolymer expressed as %w or as weight fraction.
[b] $\beta/\alpha$ is the ratio of copolymer rubber phase intrinsic viscosity (not directly measureable) divided by that of the homopolymer phase and is determined as functions of both intrinsic viscosity (IV) measurements on the whole polymer and the homopolymer portion and melt flow (MF).
[c] R1 = first stage recycle loop; R2 = second stage recycle loop.
[d] Ratio of moles of deactivator to moles of aluminum alkyl compound (triethylaluminum) added to the first stage reactor.
[e] Reaction was shut down with incidence of high static charge and associated polymer sheet formation.
[f] Triethylaluminum in isopentane was added to the second recycle loop.
[g] Reduction component was added to both the first stage and second stage recycle loops.

It is noted that the addition of some of the components to the second reactor loop, resulted in unexpected and excessive

electrostatic charge buildup within the second reactor (See Parts 3 and 6, TABLE 1). As a result, fused chunks of polymer (i.e. sheets) formed in the reactor, and in each instance, the run had to be terminated and the reactor opened and cleaned. However, addition of the same component to the first reactor loop did not result in sheeting in either the first or second reactor. Hence, there is a distinct advantage in adding the reduction component to the first recycle loop.

With at least one effective (1-hexyne and 1-decyne were ineffective) reduction component present, high impact polypropylene samples having intrinsic viscosity ratios (by both measures of $\beta/\alpha$) about 2.0 or greater were prepared with moderate to low gel contents. A value of $\beta/\alpha$ less than 2.0 by either measure of $\beta/\alpha$ signifies a boundary region within which the onset of excessive gels can take place, but in fact may not as a result of any of various factors relating to the specific melt shearing environment. Additionally, polymer with a rubber content ($F_c$) of near 27% by weight was made with no tendency toward the cohesiveness (i.e. stickiness/ clumping) of the powder displayed.

All polymer samples were extruded on a 35 mm screw diameter Werner-Pfleiderer twin-screw extruder (melt temperature 229-235°C). Injection moldings were done on an Arburg reciprocating screw 25 ton clamp molding machine (Model No. 221-55-250). Testing of the samples generally occurred at least three weeks after molding the polymer.

Film extrusion were conducted on a 19.05 mm (3/4 inch) screw diameter Brabender equipped with a Killion chill roll. The screen pack used was a 20/60/120/20 mesh size (from barrel end to die). The extrusion melt temperature was 260-270°C.

The "Flexural Modulus" (1% secant at 1.27 mm/min (0.05 inches/min)) of the molded polymer products were determined according to ASTM D-709A [ISO 178]. Gardner Impact at -30°C was determined according to ASTM D-3029, Procedure G. Notched Izod impact strength at both -20°C and 23°C was determined according to ASTM D-256. For gel measurements, pieces of cast film measuring about 304.8 mm (12 inches) long by about 152.4 mm (6 inches) wide and from 25.4 to 50.8 µm (1 to 2 mils) in thickness were sectioned into quadrants. A small sample was taken from each quadrant for photomicroscopy. All photographs were taken with transmitted light (100X) with Polaroid type 57 film, using a Nikon Labophot-pol microscope. The results are given in TABLE 2.

TABLE 2

| PART | $F_o$ %w | GARDNER -30°C J (in-lb) | IZOD -20°C J/m (ft lb/in) | IZOD @ 23°C J/m (ft lb/in) | FLEXURAL MODULUS MPa (psi) | GELS[a] |
|---|---|---|---|---|---|---|
| 2-25 | 20.7 | (298)33.67 | (1.19)63.5 | (12.87)687.0 | 978(141,900) | 27 |
| 5-40 | 20.8 | (287)32.43 | (1.14)60.9 | (12.22)652.3 | 1002(145,300) | 27 |
| 5-50 | 17.3 | (278)31.41 | (1.19)63.5 | (9.42)502.8 | 1042(151,200) | 27 |
| 4A-75 | 17.5 | (200)22.66 | (1.44)76.9 | (9.77)521.5 | 1033(149,800) | 81 |
| 4A-81 | 14.1 | (169)19.09 | (1.11)59.3 | (2.70)144.1 | 1131(164,000) | 136 |
| 4B-93 | 23.2 | (136)15.37 | (1.08)57.6 | (6.86)366.2 | 1050(152,300) | 352 |
| 4B-96 | 21.6 | (230)25.99 | (1.37)73.1 | (10.98)586.1 | 917(141,800) | 244 |
| 8-110 | 21.3 | (266)30.05 | (1.21)64.6 | (11.43)610.1 | 1023(148,400) | 27 |
| 8-112 | 17.5 | (189)21.35 | (1.03)55.0 | (9.54)509.2 | 1095(158,800) | 54 |
| 10-119 | 22.2 | (300)33.90 | (1.43)76.3 | (12.30)656.5 | 1009(146,300) | 81 |
| 10-120 | 26.6 | (293)33.10 | (3.26)174 | (14.69)784.1 | 835(121,100) | 81 |
| 10-122 | 22.3 | (309)34.91 | (1.79)95.5 | (13.51)721.1 | 941(136,500) | 108 |

[a] The number of gels measuring 50 μm in diameter and larger per 100 $mm^2$.

It is evident that treatment with methyl dipropasol has a marked effect on gel production and corresponding improved notched Izod at 23°C. Improvements seen with notched Izod at 23°C parallel those seen with the Gardner

impact strength at -30°C. Gels apparently had little effect on notched Izod impact at -20°C, as indicated in TABLE 2.

## Claims

1. A two stage gas phase process for producing polypropylene copolymer wherein the first stage reactor has a recycle loop containing primarily gaseous material and a compressor and a heat exchanger, and a gel reduction component is introduced into the recycle loop at a point between the outlet from the first stage reactor and the heat exchanger.

2. A process according to claim 1 wherein the gel reduction component is an electron donor.

3. A process according to claim 2 wherein the electron donor is a ketone, alkylene, tertiary amine, ether, ester, acid amide or alcohol or a combination thereof.

4. A process according to claim 2 wherein the electron donor is an alkylene of the formula $R\text{-}O\text{-}(\text{-}C_nH_{2n}\text{-}O\text{-})_x\text{-}R$ or an alkylenediamine of the formula $[R\text{-}O\text{-} (\text{-}C_nH_{2n}\text{-}O\text{-})_x]_2\text{-}N\text{-}C_nH_{2n}\text{-}N\text{-}[(\text{-}C_nH_{2n}\text{-}O\text{-})_xR]_2$, wherein each group R is independently hydrogen, an alkyl or an acyl of up to 20 carbon atoms, n is 2 or 3 and each x is independently a number from 1 to 10.

5. A process according to claim 3 wherein the electron donor is an alkylene glycol.

6. A process according to claim 3 wherein the electron donor is a ketone.

7. A process according to claim 6 wherein the ketone is methyl ethyl ketone, cyclohexanone, acetophenone or dibutyl ketone or a combination thereof.

8. A process according to claim 3 wherein the electron donor is an ester.

9. A process according to claim 8 wherein the ester is ethyl acetate, butyl butyrate, diethyl phthalate or γ-butyrolactone or a combination thereof.

10. A process according to claim 3 wherein the electron donor is an ether.

11. A process according to claim 10 wherein the ether is diethyl ether, dibutyl ether, diisomyl ether, anisole or diphenyl ether or a combination thereof.

12. A process according to claim 3 wherein the electron donor is an alkylene diamine.

13. A process according to claim 3 wherein the electron donor is an acid amide.

14. A process according to claim 13 wherein the acid amide is N,N-dimethylacetamide, N,N-dimethylbenzamide or N, N-dimethylacrylamide or a combination thereof.

## Patentansprüche

1. Zweistufiges Gasphasen-Verfahren zur Herstellung von Polypropylen-Copolymer, in welchem der Reaktor der ersten Stufe eine Kreislaufschleife aufweist, die hauptsächlich gasförmiges Material und einen Kompressor und einen Wärmetauscher enthält, und eine Gel-Verminderungskomponente in die Kreislaufschleife an einem Punkt zwischen dem Auslaß aus dem Reaktor der ersten Stufe und dem Wärmetauscher eingeführt wird.

2. Verfahren nach Anspruch 1, in welchem es sich bei der Gel-Verminderungskomponente um einen Elektronendonor handelt.

3. Verfahren nach Anspruch 2, in welchem der Elektronendonor ein Keton, Alkylen, tertiäres Amin, Ether, Ester, Säureamid oder Alkohol oder eine Kombination davon ist.

4. Verfahren nach Anspruch 2, in welchem der Elektronendonor ein Alkylen der Formel $R\text{-}O\text{-}(\text{-}C_nH_{2n}\text{-}O\text{-})_x\text{-}R$ oder ein

Alkylendiamin der Formel $[R\text{-}O\text{-}(\text{-}C_nH_{2n}O\text{-})_x]_2\text{-}N\text{-}C_nH_{2n}\text{-}N\text{-}[(\text{-}C_nH_{2n}\text{-}O\text{-})_xR]_2$, in welcher jede Gruppe R unabhängig Wasserstoff, ein Alkyl oder ein Acyl mit bis zu 20 Kohlenstoffatomen bedeutet, n 2 oder 3 ist und jedes x unabhängig eine Zahl von 1 bis 10 darstellt, ist.

**5.** Verfahren nach Anspruch 3, in welchem der Elektronendonor ein Alkylenglycol ist.

**6.** Verfahren nach Anspruch 3, in welchem der Elektronendonor ein Keton ist.

**7.** Verfahren nach Anspruch 6, in welchem das Keton Methylethylketon, Cyclohexanon, Acetophenon oder Dibutylketon oder eine Kombination davon ist.

**8.** Verfahren nach Anspruch 3, in welchem der Elektronendonor ein Ester ist.

**9.** Verfahren nach Anspruch 8, in welchem der Ester Ethylacetat, Butylbutyrat, Diethylphthalat oder γ-Butyrolacton oder eine Kombination davon ist.

**10.** Verfahren nach Anspruch 3, in welchem der Elektronendonor ein Ether ist.

**11.** Verfahren nach Anspruch 10, in welchem der Ether Diethylether, Dibutylether, Diisoamylether, Anisol oder Diphenylether oder eine Kombination davon ist.

**12.** Verfahren nach Anspruch 3, in welchem der Elektronendonor ein Alkylendiamin ist.

**13.** Verfahren nach Anspruch 3, in welchem der Elektronendonor ein Säureamid ist.

**14.** Verfahren nach Anspruch 13, in welchem das Säureamid N,N-Dimethylacetamid, N,N-Dimethylbenzamid oder N, N-Dimethylacrylamid oder eine Kombination davon ist.

## Revendications

**1.** Procédé en phase gazeuse à deux étapes pour la production d'un copolymère polypropylénique, dans lequel le réacteur de première étape comporte une boucle de recyclage contenant principalement une matière gazeuse, un compresseur et un échangeur de chaleur, et un composant réduisant la production de gels est introduit dans la boucle de recyclage en un point situé entre la sortie du réacteur de première étape et l'échangeur de chaleur.

**2.** Procédé suivant la revendication 1, dans lequel le composant réduisant la production de gels est un donneur d'électrons.

**3.** Procédé suivant la revendication 2, dans lequel le donneur d'électrons est une cétone, un alkylène, une amine tertiaire, un éther, un ester, un amide d'acide ou un alcool ou une association de ces donneurs.

**4.** Procédé suivant la revendication 2, dans lequel le donneur d'électrons est un alkylène de formule $R\text{-}O\text{-}(\text{-}C_nH_{2n}\text{-}O\text{-})_x\text{-}R$ ou une alkylènediamine de formule $[R\text{-}O\text{-}(\text{-}C_nH_{2n}\text{-}O\text{-})_x]_2\text{-}N\text{-}C_nH_{2n}\text{-}N\text{-}[(\text{-}C_nH_{2n}\text{-}O\text{-})_xR]_2$, formules dans lesquelles chaque groupe R représente, indépendamment, l'hydrogène, un groupe alkyle ou un groupe acyle ayant jusqu'à 20 atomes de carbone, n a la valeur 2 ou 3 et chaque x représente, indépendamment, un nombre de 1 à 10.

**5.** Procédé suivant la revendication 3, dans lequel le donneur d'électrons est un alkylène-glycol.

**6.** Procédé suivant la revendication 3, dans lequel le donneur d'électrons est une cétone.

**7.** Procédé suivant la revendication 6, dans lequel la cétone est la méthyléthylcétone, la cyclohexanone, l'acétophénone, la dibutylcétone ou une association de ces cétones.

**8.** Procédé suivant la revendication 3, dans lequel le donneur d'électrons est un ester.

**9.** Procédé suivant la revendication 8, dans lequel l'ester est l'acétate d'éthyle, le butyrate de butyle, le phtalate de diéthyle ou la γ-butyrolactone ou une association de ces esters.

**10.** Procédé suivant la revendication 3, dans lequel le donneur d'électrons est un éther.

**11.** Procédé suivant la revendication 10, dans lequel l'éther est l'éther de diéthyle, l'éther de dibutyle, l'éther de diisoamyle, l'anisole ou l'éther de diphényle ou une association de ces éthers.

**12.** Procédé suivant la revendication 3, dans lequel le donneur d'électrons est une alkylènediamine.

**13.** Procédé suivant la revendication 3, dans lequel le donneur d'électrons est un amide d'acide.

**14.** Procédé suivant la revendication 13, dans lequel l'amide d'acide est le N,N-diméthylacétamide, le N,N-diméthylbenzamide ou le N,N-diméthylacrylamide ou une association de ces amides.